# EUROPÄISCHE PATENTSCHRIFT

(11) **EP 3 405 693 B1**
(45) Veröffentlichungstag und Bekanntmachung des Hinweises auf die Patenterteilung: **20.11.2019**
(21) Anmeldenummer: 16700921.6
(22) Anmeldetag: 19.01.2016
(51) Int. Cl.: F16D 65/18, F16D 11/14, F16D 28/00

(54) **KUPPLUNGSANORDNUNG MIT EINER KUGELRAMPENEINHEIT UND VERFAHREN ZUM STEUERN EINER KUPPLUNGSANORDNUNG**
CLUTCH ARRANGEMENT HAVING A BALL RAMP UNIT, AND METHOD FOR CONTROLLING A CLUTCH ARRANGEMENT
SYSTÈME D'EMBRAYAGE À ENSEMBLE RAMPES ET BILLES ET PROCÉDÉ POUR ASSURER LA COMMANDE D'UN SYSTÈME D'EMBRAYAGE

(43) Veröffentlichungstag der Anmeldung: 28.11.2018
(73) Patentinhaber: GKN AUTOMOTIVE LTD., Redditch Worcestershire B98 0AJ (GB)
(72) Erfinder: BEIGANG, Wolfgang, 53819 Neunkirchen-Seelscheid (DE)
(74) Vertreter: Neumann Müller Oberwalleney & Partner Patentanwälte
(86) Internationale Anmeldenummer: PCT/EP2016/050999
(87) Internationale Veröffentlichungsnummer: WO 2017/125135

(56) Entgegenhaltungen:
- EP-A2- 2 098 741
- WO-A1-2015/120909
- DE-A1-102004 004 931

## Beschreibung

Die Erfindung betrifft eine Kupplungsanordnung für ein Kraftfahrzeug mit mehreren angetriebenen Antriebsachsen. Insbesondere kann die Kupplungsanordnung für eine Antriebsstranganordnung verwendet werden, die einen ersten Antriebsstrang zum permanenten Antreiben einer ersten Antriebsachse sowie einen zweiten Antriebsstrang zum optionalen Antreiben einer zweiten Antriebsachse aufweist. Derartige Antriebskonzepte mit bedarfsweise zuschaltbarer beziehungsweise abschaltbarer Antriebsachse werden auch als "Hang-on", "On-demand" oder "Disconnect"-Systeme bezeichnet.

Es werden insbesondere folgende Antriebskonzepte bei Kraftfahrzeugen unterschieden. Kraftfahrzeuge mit Frontmotor, bei denen die Vorderachse permanent angetrieben wird und die Hinterachse bedarfsweise zuschaltbar ist. Weiter gibt es Kraftfahrzeuge mit Frontmotor, bei denen die Hinterachse permanent angetrieben ist und die Vorderachse bedarfsweise zuschaltbar ist. Schließlich sind Kraftfahrzeuge mit Heckmotor bekannt, bei denen die Hinterachse permanent angetrieben ist und die Vorderachse mittels einer Hang-on Kupplung bedarfsweise zugeschaltet wird.

Aus der DE 10 2004 004 931 A1 ist eine Lamellenkupplung bekannt, die von einer Axialverstellvorrichtung mit einem Stellmotor betätigbar ist. Durch Betätigen des Stellmotors wird die Stellscheibe gegenüber der Stützscheibe verdreht, so dass die Kugeln in den Kugelrillen in flachere Bereiche laufen. Dabei entfernt sich die Stellscheibe axial von der Stützscheibe und wirkt über ein Axiallager auf die Druckscheibe im Schließsinn.

Aus der WO 2015 120909 A1 ist eine Kupplungsanordnung für den Antriebsstrang eines Kraftfahrzeugs bekannt. Die Kupplungsanordnung umfasst eine Kupplung, die eine erste Welle und eine zweite Welle antriebsmäßig verbinden oder trennen kann, eine Bremse, mit der die zweite Welle gegenüber einem ortsfesten Bauteil abbremsbar ist, und eine Betätigungsvorrichtung, mit der die Kupplung und die Bremse derart betätigbar sind, dass die Bremse erst betätigt wird, wenn die Kupplung zumindest teilweise geöffnet ist. Die Betätigungsvorrichtung umfasst einen Elektromotor und eine Rampenanordnung.

Aus der DE 10 2005 007 651 A1 ist ein Verteilergetriebe mit einer regelbaren Kupplungseinrichtung für ein Kraftfahrzeug mit zuschaltbarem Allradantrieb bekannt. Die Kupplungseinrichtung ist über einen Elektromotor und eine Antriebswandlereinrichtung betätigbar. Die Antriebswandlereinrichtung umfasst eine Spindel-Mutter-Anordnung, die eine Drehbewegung des Elektromotors in eine translatorische Bewegung zum Betätigen der Kupplungseinrichtung umwandelt. Der Elektromotor ist in Form eines Asynchronmotors gestaltet.

Aus der DE 203 14 141 U1 ist eine Axialverstellvorrichtung zum Betätigen einer Lamellenkupplung im Antriebsstrang eines Kraftfahrzeugs bekannt. Die Axialverstellvorrichtung umfasst eine Kugelrampenanordnung mit einer axial, radial und drehfest im Gehäuse festgelegte Stützscheibe und einer hierzu axial bewegliche und mittels eines Elektromotors drehend antreibbare Stellscheibe. Die Stützscheibe und die Stellscheibe haben umfangsverteilte Kugelrillen mit veränderlicher Tiefe, zwischen denen jeweils eine Kugel aufgenommen ist. Die Stellscheibe ist gegen die Lamellenkupplung axial abgestützt und mittels der in den Kugelrillen gehaltenen Kugeln axial und radial gelagert.

Der vorliegenden Erfindung liegt die Aufgabe zugrunde, eine Kupplungsanordnung mit einer Kugelrampeneinheit vorzuschlagen, die einen kompakten Aufbau hat, ein sicheres Schalten einer optional antreibbaren Antriebswelle ermöglicht und effizient betrieben werden kann, wobei der Energiebedarf zum Betätigen und Halten einer Schaltstellung möglichst gering sein soll. Die Aufgabe besteht ferner darin, ein effizientes Verfahren zur Ansteuerung einer solchen Kupplungsanordnung vorzuschlagen. Weiter besteht die Aufgabe darin, eine Anriebsstranganordnung mit einer solchen Kupplungsanordnung vorzuschlagen, die das Stillsetzen eines Antriebsstrangabschnitts ermöglicht.

Eine Lösung besteht in einer Kupplungsanordnung für einen Antriebsstrang eines Fahrzeugs, umfassend: eine Trennkupplung zum Abschalten eines Antriebsstrangs, wobei die Trennkupplung zumindest ein erstes Kupplungsteil und ein zweites Kupplungsteil aufweist; ein Federelement, das die Trennkupplung in eine Schließstellung beaufschlagt, in der Drehmoment zwischen dem ersten Kupplungsteil und dem zweiten Kupplungsteil übertragbar ist; eine Kugelrampeneinheit zum Beaufschlagen der Trennkupplung in eine Offenstellung, wobei die Kugelrampeneinheit einen Außenring mit mehreren umfangsverteilten äußeren Kugelbahnen, einen Innenring mit mehreren umfangsverteilten inneren Kugelbahnen und mehrere Kugeln aufweist, die jeweils zwischen einer äußeren Kugelbahn und einer inneren Kugelbahn angeordnet sind; eine Antriebseinheit zum Betätigen der Kugelrampeneinheit, wobei die Antriebseinheit ausgestaltet ist, um einen von dem Außenring und dem Innenring um eine Drehachse drehend anzutreiben; wobei die äußeren Kugelbahnen und die inneren Kugelbahnen derart rampenartig gestaltet sind, dass ein drehendes Antreiben des drehend antreibbaren Rings mittels der Antriebseinheit eine relative axiale Bewegung zwischen dem Außenring und dem Innenring bewirkt, so dass die Trennkupplung geöffnet wird; wobei sich die äußeren Kugelbahnen und die inneren Kugelbahnen in Umfangsrichtung über jeweils weniger als 120° erstrecken, und wobei die äußeren Kugelbahnen und die inneren Kugelbahnen so gestaltet sind, dass eine im Längsschnitt durch eine äußere und eine innere Kugelkontaktstelle verlaufende Wirkungslinie mit der Drehachse einen Winkel einschließt, der größer als 0° und kleiner als 90° ist.

Ein Vorteil der erfindungsgemäßen Kugelrampeneinheit ist, dass der Außenring und der Innenring über die Kugeln sowohl in axialer als auch in radialer Richtung relativ zueinander gelagert sind. Das heißt, die Kugeln übertragen sowohl Axialkräfte vom axial abgestützten Ring auf den axial bewegbaren Ring bei Betätigung der Antriebseinheit, sowie Radialkräfte, die zwischen den beiden Ringen insbesondere bei Betätigung der Antriebseinheit wirksam sind. Dadurch, dass die durch die Kugelkontaktstellen verlaufenden Kraftwirkungslinien mit der Drehachse jeweils einen spitzen Winkel einschließen, wird im Längsschnitt betrachtet eine Anordnung nach Art eines Schrägkugellagers erreicht. Hierdurch ergibt sich eine besonders gute radiale Abstützung des Außenrings gegenüber dem Innenring. Zusammen mit der axialen Steigung der Kugelbahnen wird auf diese Weise eine Doppelfunktion der Kugelrampeneinheit realisiert, nämlich die eines Rotations-Translations-Wandlers und die eines Radiallagers.

Nach einer bevorzugten Ausgestaltung sind die äußeren Kugelbahnen und die inneren Kugelbahnen zumindest teilweise axial überdeckend angeordnet. Insbesondere ist vorgesehen, dass die äußeren Kugelbahnen einen größeren mittleren Durchmesser haben als die inneren Kugelbahnen. Auf diese Weise kann der Innenring sich in den Außenring axial hineinerstrecken, wobei sich die einander radial gegenüberliegenden Außenring-Kugelbahnen und Innenring-Kugelbahnen einander zumindest teilweise axial überdecken können. In Konkretisierung kann vorgesehen sein, dass ein kleinster Innendurchmesser der Außenring-Kugelbahnen größer ist als ein größter Außendurchmesser der Innenring-Kugelbahnen. Entsprechend kann vorgesehen sein, dass der Außenring einen größeren Durchmesser hat als der Innenring. Zumindest einer von den beiden Ringen kann hülsenförmig gestaltet sein. Die axiale Länge vom Außenring beziehungsweise Innenring hängt vom Hubbedarf der Kupplung ab und kann insbesondere kleiner als das Dreifache, vorzugsweise kleiner als das Zweifache des Kugeldurchmessers der Kugeln sein. Auf diese Weise wird eine axial kompakte Bauform erreicht.

Eine Außenringstützfläche und eine Innenringstützfläche bilden jeweils ein Bahn- oder Stützflächenpaar, in der jeweils eine Kugel geführt ist, wobei die Kugelbahnen des Außenrings und des Innenrings über die Kugeln gegeneinander axial und radial abgestützt sind. Mit Kugelkontaktstelle ist eine Stelle gemeint, in der eine Kugel mit der äußeren beziehungsweise inneren Stützfläche in Anlagekontakt ist. Sofern eine Kontaktstelle im Längsschnitt betrachtet linienförmig ist, beispielsweise weil die Kugel über einen Kugelumfangsbereich mit der jeweiligen Stützfläche in Anlage ist, bezieht sich die Kugelkontaktstelle im Längsschnitt auf einen mittleren Kontaktbereich des Anlagebereichs.

Die Kugeln definieren beim Abrollen entlang der äußeren und inneren Kugelbahnen jeweils eine äußere und innere Kontaktkurve, wobei die äußeren und inneren Kugelbahnen so gestaltet sind, dass die äußeren und inneren Kontaktkurven jeweils gleich lang sind. Hiermit wird in vorteilhafter Weise erreicht, dass die Positionen der Steigungsänderungen in den Innenbahnen und in den Außenbahnen gleichzeitig erreicht werden, wenn die Kugeln beim relativen Verdrehen eines Ringes relativ zum anderen Ring auf ihrer jeweiligen Kontaktkurve in der jeweiligen Bahn abrollen. Geometrisch bedeutet dies, dass die Drehwinkelverhältnisse der Innen- und Außenbahnen entsprechend der Übersetzung eines Planetengetriebes ausgelegt sind, mit den maßgeblichen Größen Kugelradius, Kontaktradius der Außenbahn und Kontaktradius der Innenbahn. Soweit die Kugeln im Längsschnitt flächige Kontaktstellen zu der jeweiligen Stützfläche haben, werden entsprechend breite Kontaktkurven gebildet.

Wenigstens eine Gruppe von den äußeren Kugelbahnen und den inneren-Kugelbahnen, das heißt die äußeren und/oder die inneren Kugelbahnen, hat eine axiale Steigungskomponente. Mit axialer Steigung ist gemeint, dass zumindest ein Teilabschnitt der Kugelbahnen mit einer Radialfläche, die senkrecht zur Drehachse steht, jeweils einen Steigungswinkel ungleich Null einschließt. Durch die axiale Steigung wird bei Drehung des einen Rings relativ zum anderen Ring eine relative axiale Bewegung des einen Rings zum anderen Ring erzeugt.

Nach einer möglichen Ausgestaltung können die äußeren Kugelbahnen und/oder die inneren Kugelbahnen Rillen aufweisen, in der jeweils eine Kugel geführt ist. Alternativ oder in Ergänzung hierzu können die äußeren Kugelbahnen und/oder die inneren Kugelbahnen auch einen sich in Umfangsrichtung erstreckenden Steg aufweisen, welcher eine seitliche Anlagefläche für die Kugeln bildet. Es sind selbstverständlich auch Kombinationen der genannten Ausgestaltungen denkbar, das heißt einer der Ringe hat Rillen, während der andere Ring sich in Umfangsichtung erstreckende Stege aufweist.

Vorzugsweise sind an dem Außenring und/oder dem Innenring jeweils zumindest drei rampenförmige Kugelbahnen über den Umfang verteilt vorgesehen, an denen jeweils eine Kugel axial und radial abgestützt ist. Hierdurch ergibt sich eine gute relative Führung zwischen dem Außenring und dem Innenring. Die zumindest drei Kugelbahnen erstrecken sich jeweils über weniger als 120° um die Drehachse. Es können auch mehr als drei Kugelbahnen vorgesehen sein, wie vier, fünf oder mehr. Mit zunehmender Anzahl von Kugeln und entsprechend zunehmender Anzahl von Kugelbahnen nimmt die individuelle Flächenbelastung ab. Ebenso verkürzt sich die Umfangserstreckung der einzelnen Kugelbahnen.

Die Antriebseinheit ist ausgestaltet, um einen der beiden Ringe drehend anzutreiben, so dass dieser gegenüber dem anderen der beiden Ringe verdreht wird. Dabei ist die Zuordnung, welcher der beiden Ringe, Außenring oder Innenring, mittels der Antriebseinheit angetrieben wird, frei wählbar und kann auf die technischen Anforderungen beziehungsweise Bauraumverhältnisse abgestimmt werden. Ebenso ist die Zuordnung der beiden Ringe in Bezug auf die axiale Abstützung frei wählbar, das heißt es kann entweder der Außenring axial abgestützt und der Innenring axial bewegbar sein oder umgekehrt. Insgesamt ergeben sich somit folgende Möglichkeiten: Außenring drehend antreibbar und axial abgestützt und Innenring drehfest und axial beweglich; Außenring drehfest gehalten und axial abgestützt und Innenring drehend antreibbar und axial beweglich; Außenring drehend antreibbar und axial beweglich und Innenring drehfest und axial abgestützt; sowie Außenring drehfest gehalten und axial beweglich und Innenring drehend antreibbar und axial abgestützt. Nach einer konkreten Ausführungsform ist vorgesehen, dass der Außenring gegenüber einem ortsfesten Bauteil axial abgestützt und mittels der Antriebseinheit drehend antreibbar ist, und dass der Innenring gegenüber dem Außenring axial bewegbar und gegenüber dem ortsfesten Bauteil drehfest gehalten ist. Das ortsfeste Bauteil kann beispielsweise ein Gehäuse einer Antriebseinheit, insbesondere einer Kupplungs- oder einer Getriebeanordnung sein.

Nach einer möglichen Ausgestaltung kann zumindest einer der Ringe, das heißt der Außenring und/oder der Innenring, in axialer Richtung hinterschnittfrei gestaltet sein. Eine axial hinterschnittfreie Kontur ermöglicht eine einfache und kostengünstige Herstellung des jeweiligen Rings im Wege eines Formverfahrens, beispielsweise durch einen Press-, Präge oder Sinterprozess.

Nach einer bevorzugten Ausgestaltung sind die äußeren Kugelbahnen und/oder die inneren Kugelbahnen so gestaltet, dass eine erste Endstellung definiert ist, in der der Außenring und der Innenring axial aneinander angenähert, das heißt ineinander gefahren sind, und eine zweite Endstellung, in der der Außenring und der Innenring axial weiter entfernt voneinander angeordnet, das heißt auseinandergefahren sind. Zumindest eine der beiden Endstellungen, das heißt die erste Endstellung und/oder die zweite Endstellung, kann durch entsprechende Gestaltung der Kugelbahnkontur der äußeren und/oder inneren Stützfläche realisiert werden, beispielsweise mittels einer Rastkontur, in welcher die zugehörige Kugel eine definierte Stellung einnimmt.

Die Konturen der äußeren Kugelbahnen und der inneren Kugelbahnen können im Bereich derjenigen Endstellung, welche durch Betätigen der Antriebseinheit angefahren wird, einen steigenden Auslauf aufweisen. Durch den steigenden Auslauf wird ein weiteres Verdrehen der Ringe zueinander über die Endstellung hinaus in einem begrenzten Maße ermöglicht, so dass die gesamte drehende Masse der Antriebseinheit beim Überschwingen über die Endlage abgefedert wird.

Die äußeren Kugelbahnen und/oder die inneren Kugelbahnen können insbesondere so gestaltet sein, dass entlang des relativen Verdrehweges zwischen der ersten Endstellung und der zweiten Endstellung eine dazwischen liegende Rastposition vorgesehen ist. Diese Zwischen-Rastposition ermöglicht es, dass die beiden Ringe relativ zueinander in einem definierten Abstand gehalten werden, der zwischen der voll eingefahrenen Position und der voll ausgefahrenen Position liegt. Dies soll insbesondere auch gelten, wenn die Antriebseinheit deaktiviert ist. Vorzugsweise weisen die äußeren Kugelbahnen und/oder die inneren Kugelbahnen einen ersten Abschnitt mit einer ersten Steigung und einen zweiten Abschnitt mit einer zweiten Steigung auf, wobei insbesondere vorgesehen ist, dass zwischen dem ersten Abschnitt und dem zweiten Abschnitt ein gestufter Zwischenabschnitt gebildet ist, der die Rastposition definiert. Die Steigungen des ersten Abschnitts und des zweiten Abschnitts sind prinzipiell frei wählbar und können entsprechend den technischen Anforderungen gestaltet werden. Insbesondere kann die Steigung des ersten Abschnitts kleiner, größer oder gleich der Steigung des zweiten Abschnitts sein. Es ist auch möglich, dass zumindest einer von dem ersten und dem zweiten Abschnitt, das heißt der erste und/oder der zweite Abschnitt, eine variable Steigung über dem Umfang haben.

Nach einer möglichen Ausführungsform kann ein Käfig mit umfangsverteilten Öffnungen vorgesehen sein, in denen die Kugeln gehalten sind. Die die Öffnungen umgebende Wandungsbereiche des Käfigs sind vorzugsweise so gestaltet, dass die Kugeln gegen Herausfallen gesichert sind. Hierfür können die einander in axialer Richtung gegenüberliegenden Wandungsbereiche der Öffnungen jeweils einen Vorsprung in radiale Richtung aufweisen. Der Käfig kann in axiale Richtung hinterschnittfrei gestaltet sein. So kann der Käfig in einem einzigen Pressvorgang in einem zweiteiligen Werkzeug hergestellt werden, wobei die Werkzeugteile entsprechend der Kontur des Käfigs ebenfalls hinterschnittfrei sind.

Nach einer möglichen Ausführungsform weist die Kraftübertragungsvorrichtung ein Antriebsteil auf, das mit einer Außenverzahnung am drehend antreibbaren Ring zur Drehmomentübertragung in Verzahnungseingriff ist. Der drehend antreibbare Ring kann der Außenring oder Innenring sein. Die Drehachse des Antriebsteils kann insbesondere parallel zur Drehachse des antreibbaren Rings angeordnet sein. Das Antriebsteil der Kraftübertragungsvorrichtung kann beispielsweise ein Ritzel, Zahnrad, Reibrolle, Zahnstange, Zahnriemen, Keilriemen oder Flachriemen sein. Durch die Kraftübertragung vom Antriebsteil wirken Radialkräfte auf den antreibbaren Ring. Sofern der angetriebene Ring der Außenring ist, können diese Radialkräfte durch die ineinander liegende Anordnung der beiden Ringe in günstiger Weise gegenüber dem Innenring radial abgestützt werden.

Es ist zumindest ein Federelement vorgesehen, das der durch die Antriebseinheit erzeugten axialen Bewegungsrichtung entgegenwirkt. Das Federelement kann insofern auch als Rückstellfeder bezeichnet werden. Ein erstes Ende des Federelements kann gegen das zweite Kupplungsteil axial abgestützt sein. Das zweite Ende des Federelements kann gegen eine Antriebswelle axial abgestützt sein, mit der das zweite Kupplungsteil drehfest und axial beweglich verbunden ist. Die Antriebswelle kann in einem ortfesten Gehäuse drehbar gelagert und axial abgestützt sein. Das zumindest eine Federelement kann beispielsweise in Form einer Schraubenfeder gestaltet sein, wobei es sich versteht, dass beliebige andere Federmittel zum Speichern von potentieller Energie verwendbar sind, beispielsweise zumindest eine Wellfeder oder Tellerfeder. Ein von der Antriebseinheit in den angetriebenen Ring eingeleitetes Drehmoment bewirkt ein Auseinanderfahren der Kugelrampeneinheit gegen die Kraft des Federelements, welche entsprechend potentielle Energie speichert. Mit anderen Worten wird der axial bewegliche Ring bei Betätigung der Antriebseinheit in eine erste axiale Richtung bewegt, während die Federmittel den axial beweglichen Ring in entgegengesetzter zweiter axialer Richtung beaufschlagen.

Nach einer möglichen Ausgestaltung können ein oder mehrere Vorspannfedern vorgesehen sein, die in derselben Richtung wirken wie das Federelement. Die zumindest eine Vorspannfeder ist so angeordnet, dass der Außenring und der Innenring gegeneinander vorgespannt sind, so dass die Kugeln zur abrollenden Bewegung stets in Anlagekontakt mit den äußeren und inneren Kugelbahnen gehalten sind. So sind die Positionen der Kugeln immer definiert, auch wenn die Federkraft der Rückstellfeder nicht über die Kugeln sondern beispielsweise über anliegende Zähne der Formschlusskupplung abgestützt ist. Die mindestens eine Vorspannfeder kann beliebig ausgestaltet sein, beispielsweise als Drahtfeder, Blechfeder, Schraubenfeder, Tellerfeder und/oder als Federscheibe mit federnden Laschen.

Die Kupplung kann nach einer ersten Ausführungsform als Formschlusskupplung gestaltet sein. Hiermit sind Kupplungen gemeint, bei denen eine Drehmomentübertragung durch formschlüssiges Ineinandergreifen von zumindest zwei Kupplungsteilen erfolgt. Das heißt, das erste Kupplungsteil und das zweite Kupplungsteil sind zur Übertragung von Drehmoment über ineinandergreifende Formschlusselemente miteinander formschlüssig koppelbar. Als Beispiele für formschlüssige Kupplungen seien hier Klauenkupplungen, Schiebemuffen-Kupplungen oder Zahnkupplungen genannt. Durch Schließen der Kupplung wird erreicht, dass ein mit dem ersten Kupplungsteil verbundenes Antriebsteil und ein mit dem zweiten Kupplungsteil verbundenes Abtriebsteil gemeinsam rotieren, während sie in geöffneten Zustand frei gegeneinander drehbar sind.

Nach einer zweiten Ausführungsform kann die Kupplung in Form einer Reibungskupplung gestaltet sein, welche zur Drehmomentübertragung zumindest eine zwischen dem ersten Kupplungsteil und dem zweiten Kupplungsteil wirksame Reibflächenpaarung aufweist. Als Beispiel für eine Reibungskupplung wird hier insbesondere eine Reiblamellenkupplung genannt, die mit dem ersten Kupplungsteil drehfest und axial beweglich verbundene erste Reiblamellen und mit dem zweiten Kupplungsteil drehfest und axial beweglich verbundene zweite Reiblamellen aufweist. Durch axiales Beaufschlagen des aus den ersten und zweiten Reiblamellen gebildeten Lamellenpakets erfolgt ein Angleichen der Drehbewegung zwischen den beiden Kupplungsteilen. Eine Reibungskupplung ermöglicht, dass das übertragbare Drehmoment variabel nach Bedarf eingestellt werden kann, da auch beliebige Zwischenstellungen zwischen der Schließstellung, in der die beiden Kupplungsteile gemeinsam drehen, und der Offenstellung, in der die beiden Kupplungsteile frei gegeneinander drehbar sind, einstellbar sind.

Für beide Ausführungsformen gilt, dass ist die Kupplung generell in Schließstellung beaufschlagt ist und ein Trennen der Kupplung durch externe Betätigung erfolgt. Insofern kann die Kupplung auch als Trennkupplung bezeichnet werden. Es ist ferner vorgesehen, dass der axial bewegliche Ring der Kugelrampeneinheit derart mit der Kupplung wirkverbunden ist, dass die Kupplung bei Betätigung der Antriebseinheit geöffnet wird. Nach einer möglichen Ausgestaltung kann das erste Kupplungsteil in einem Gehäuse um die Drehachse drehbar gelagert und axial abgestützt sein, und das zweite Kupplungsteil axial bewegbar sein; wobei der axial bewegliche Ring von der Rückstellfeder in der ersten Richtung beaufschlagt wird, in der das erste Kupplungsteil und das zweite Kupplungsteil zur Drehmomentübertragung miteinander in Eingriff sind; und wobei der axial bewegliche Ring bei Betätigung der Antriebseinheit in der zweiten Richtung axial beaufschlagt wird, in der das erste Kupplungsteil und das zweite Kupplungsteil außer Eingriff sind.

Nach einer Weiterbildung kann eine Bremseinheit zum Abbremsen eines mit dem ersten oder zweiten Kupplungsteil verbundenen Antriebsstrangabschnitts vorgesehen sein. Die Bremseinheit wird vorzugsweise von der Kugelrampenanordnung betätigt, insbesondere mittels der zweiten Steigungsabschnitte vom Außenring beziehungsweise Innenring. Die Bremseinheit kann ein mit dem beweglichen Kupplungsteil fest verbundenes Bremsenteil aufweisen sowie ein mit einem ortsfesten Bauteil verbundenes zweites Bremsenteil. Die beiden Bremsenteile werden durch Auseinanderfahren der Kugelrampeneinheit miteinander in Reibkontakt gebracht, wobei gegebenenfalls ein oder mehrere Reibscheiben zwischen den Bremsenteilen angeordnet sein können. Durch Reibschluss zwischen den Bremsenteilen wird das axial bewegliche Kupplungsteil bis zum Stillstand verzögert. Somit stehen alle mit dem Kupplungsteil antriebsverbundenen Teile des Antriebsstranges still.

Ein erfindungsgemäßes Verfahren zur Steuerung der Kupplungsanordnung kann folgende Schritte umfassen: Öffnen der Formschlusskupplung durch Betätigung der Antriebseinheit in eine erste Betätigungsrichtung, wobei der axial bewegliche Ring mindestens in die Zwischenrastposition bewegt wird; Bremsen der mit dem zweiten Kupplungsteil verbundenen Antriebswelle, wenn das erste Kupplungsteil und das zweite Kupplungsteil außer Eingriff sind, dadurch, dass der axial bewegliche Ring über die Zwischenrastposition hinaus vom axial abgestützten Ring wegbewegt wird; Deaktivieren der Antriebseinheit, wobei der axial bewegliche Ring in der Zwischenrastposition mit Abstand relativ zum axial abgestützten Ring gehalten wird, so dass die Formschlusskupplung geöffnet bleibt; Schließen der Formschlusskupplung durch Betätigung der Antriebseinheit in eine entgegengesetzte zweite Betätigungsrichtung, wobei der axial bewegliche Ring aus der Zwischenrastposition herausbewegt wird und mittels der Rückstellfeder in Richtung zum axial abgestützten Ring beaufschlagt wird.

Die beschriebene Kupplungsanordnung mit Kugelrampeneinheit erzeugt bei Betrieb nur geringe Reibkräfte und hat eine geringe Hysterese. Damit erlaubt die Kupplungsanordnung eine sehr einfache Ansteuerung durch einen relativ kleinen Elektromotor, der für die Bereitstellung vergleichbarer Axialkräfte nur geringe Antriebsmomente benötigt. Dieses kompakte System mit einem einzigen Wälzkörpersatz kann eine rein axial angeordnete Wälzkörper-Kugelrampeneinheit kombiniert mit einem zusätzlichen Wälzlager zur radialen Wälzlagerung der Zahnkräfte des Zahnradantriebs vom Elektromotor ersetzen. Es wird insgesamt ein kompakter, baulich einfacher und damit kostengünstig herstellbarer Aufbau erreicht.

Die genannte Kupplungsanordnung kann insbesondere im Antriebsstrang eines Kraftfahrzeugs verwendet werden, um eine Drehmomentübertragung auf eine optional antreibbare Antriebsachse bei Bedarf zu unterbrechen ("Disconnect"-Prinzip). Nach einer möglichen Ausführungsform kann die Kupplungsanordnung in eine Abtriebsanordnung (Power Takeoff Unit, PTU) oder ein Verteilergetriebe integriert sein. Eine Abtriebsanordnung umfasst insbesondere eine Eingangswelle, ein Tellerrad, ein mit dem Tellerrad kämmendes Ritzel und eine Ausgangswelle, wobei insbesondere vorgesehen sein kann, dass die Kupplungsanordnung im Leistungspfad zwischen der Eingangswelle und dem Tellerrad angeordnet ist. Mit einer solchen erfindungsgemäßen Abtriebsanordnung ergeben sich die oben genannten Vorteile einer einfachen Betätigung der Kupplung bei niedrigen Betätigungs- und Haltekräften. Es versteht sich, dass die Kupplungsanordnung auch an anderer Stelle im Antriebsstrang des Kraftfahrzeugs angeordnet sein kann, beispielsweise in einem Differentialgetriebe.

Bevorzugte Ausführungsformen werden nachstehend anhand der Zeichnungsfiguren erläutert. Hierin zeigt:
- Figur 1: eine erfindungsgemäße Kupplungsanordnung in einer ersten Ausführungsform in perspektivischer Explosionsdarstellung;
- Figur 2: die Kupplungsanordnung aus Figur 1 in perspektivischer Schnittdarstellung;
- Figur 3: die Kupplungsanordnung aus Figur 1 im Längsschnitt in Schließstellung;
- Figur 4: die Kupplungsanordnung aus Figur 1 im Längsschnitt in Offenstellung;
- Figur 5: die Kupplungsanordnung aus Figur 1 im Längsschnitt in Bremsstellung;
- Figur 6: die Kupplungsanordnung aus Figur 1 im Längsschnitt in Schließstellung mit weiteren Details;
- Figur 7: die Kupplungsanordnung aus Figur 1 in Radialansicht in Schließstellung;
- Figur 8: die Kugelrampeneinheit der Kupplungsanordnung aus Figur 1 in perspektivischer Explosionsdarstellung;
- Figur 9: die Kugelrampeneinheit der Kupplungsanordnung aus Figur 1 im Längsschnitt;
- Figur 10: den Außenring der Kugelrampeneinheit gemäß Figur 8 im Längsschnitt;
- Figur 11: den Kugelkäfig der Kugelrampeneinheit gemäß Figur 8 im Längsschnitt;
- Figur 12: den Innenring der Kugelrampeneinheit gemäß Figur 8 im Längsschnitt;
- Figur 13: eine erfindungsgemäße Kupplungsanordnung in einer zweiten Ausführungsform im Längsschnitt; und
- Figur 14: eine erfindungsgemäße Kupplungsanordnung in einer dritten Ausführungsform im Längsschnitt.

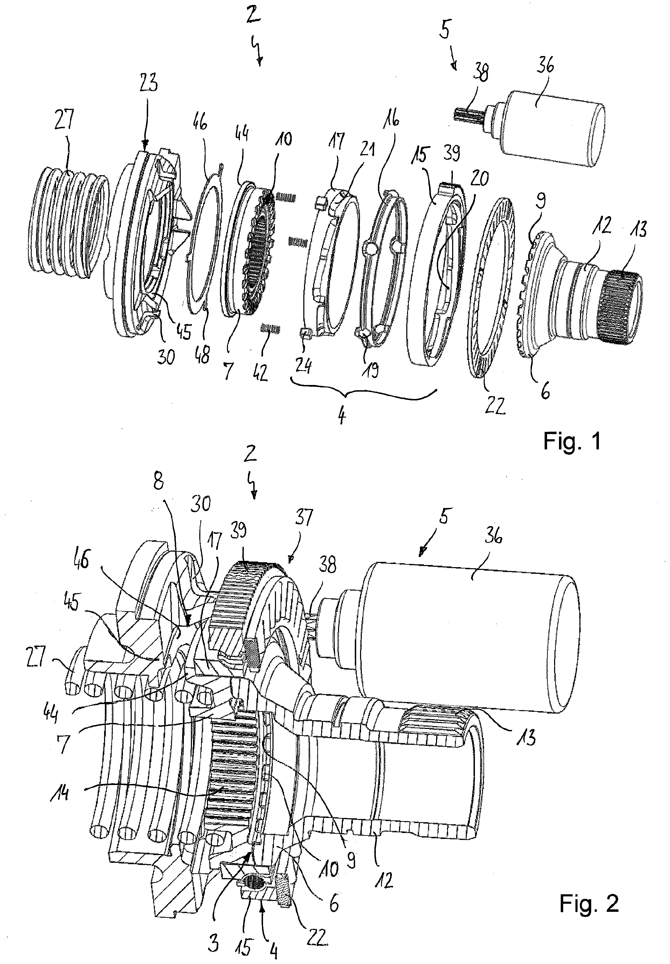

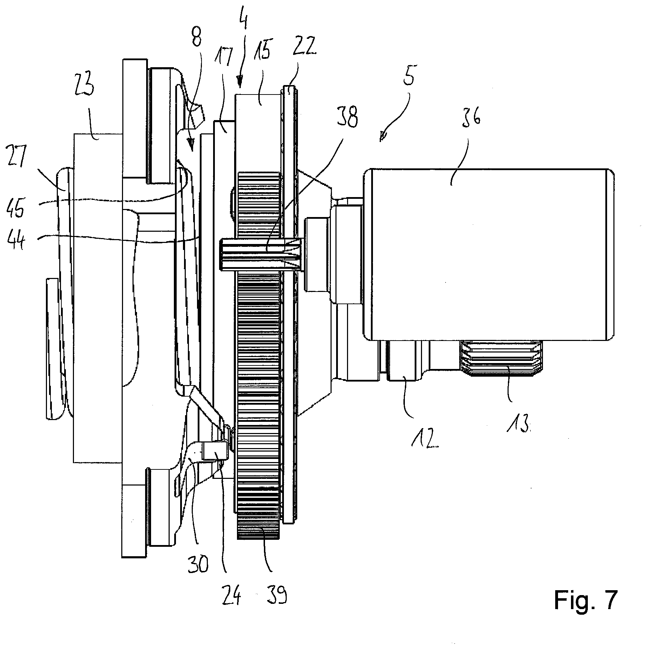

Die Figuren 1 bis 12 werden nachstehend gemeinsam beschrieben. Es ist eine Kupplungsanordnung 2 gezeigt mit einer Kupplung 3, einer Kugelrampeneinheit 4 zum Betätigen der Kupplung 3 und einer Antriebseinheit 5 zum Betätigen der Kugelrampeneinheit 4. Die Kupplung 3 umfasst ein erstes Kupplungsteil 6, ein zweites Kupplungsteil 7, welche zueinander um eine Drehachse A drehbar angeordnet sind und zumindest in eine Schließstellung und eine Offenstellung überführbar sind.

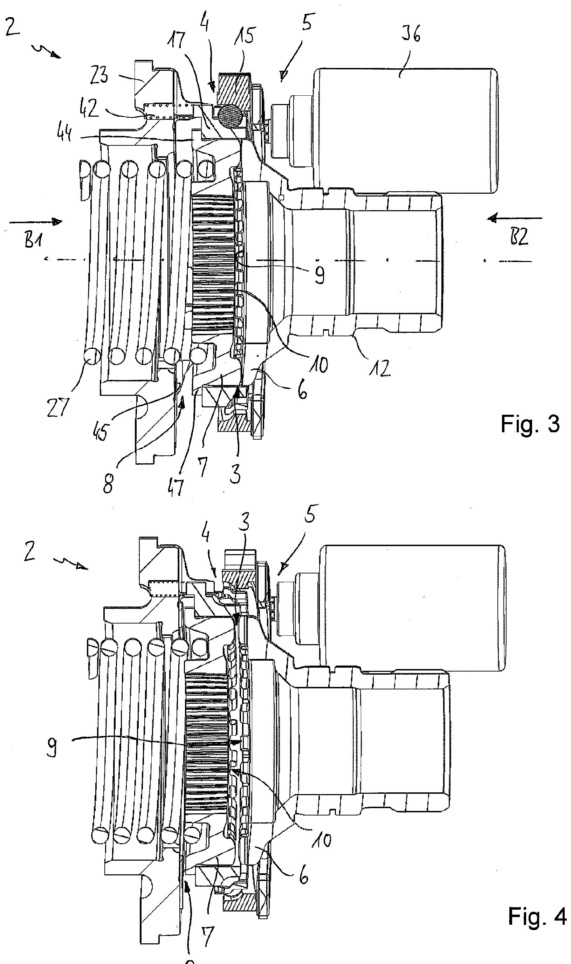

Die Kupplung 3 ist als Formschlusskupplung gestaltet, wobei das erste Kupplungsteil 6 ein an einer Stirnfläche ein erstes Eingriffsprofil 9 aufweist, das in der Schließstellung der Kupplung 3 in ein gegengleiches zweites Eingriffsprofil 10 des zweiten Kupplungsteils 6 zur Drehmomentübertragung eingreift. Die Eingriffsprofile 9, 10 der ersten und zweiten Kupplungsteil 6, 7 sind in Form von Stirnverzahnungen gestaltet. Figur 3 zeigt die Kupplung 3 in einer Schließstellung, in der das zweite Kupplungsteil 7 an das erste Kupplungsteil 6 angenähert ist, so dass die Eingriffsprofile der Kupplungsteile zur Drehmomentübertragung ineinandergreifen. In Figur 4 ist das zweite Kupplungsteil 7 in die zweite axiale Richtung B2 bewegt und befindet sich in Offenstellung, in der der Verzahnungseingriff zwischen den beiden Kupplungsteilen 6, 7 unterbrochen ist. In dieser Stellung ist das zweite Kupplungsteil 7 gegenüber dem ersten Kupplungsteil 6 axial verschoben, so dass die Kupplungsteile 6, 7 relativ zueinander frei drehen können, das heißt, eine Drehmomentübertragung unterbrochen ist.

Das erste Kupplungsteil 6 ist einteilig mit einer Antriebswelle 12 gestaltet, die zur Drehmomenteinleitung eine Wellenverzahnung 13 aufweist. Das zweite Kupplungsteil 7 ist ring- beziehungsweise hülsenförmig gestaltet und hat eine innere Wellenverzahnung 14, in die ein Anschlussbauteil zur Drehmomentübertragung in Eingriff bringbar ist. Es versteht sich jedoch, dass das erste Kupplungsteil 6 und das zweite Kupplungsteil 7 entsprechend den technischen Gegebenheiten der Anschlussbauteile auch anders gestaltet sein können und insbesondere andere Anschlussmittel zur Drehmomentübertragung aufweisen können.

Die Kugelrampeneinheit 4 umfasst einen Außenring 15 mit mehreren über den Umfang verteilten rampenförmigen äußeren Kugelbahnen 20, einen Innenring 17 mit mehreren umfangsverteilten rampenförmigen inneren Kugelbahnen 21, einen Kugelkäfig 16 sowie mehrere Kugeln 19. Die Kugeln 19 sind jeweils in einem Bahnpaar aus einer äußeren Kugelbahn 20 und einer inneren Kugelbahn 21 angeordnet und geführt. Die äußeren und inneren Kugelbahnen 20, 21 erstrecken sich im Wesentlichen in Umfangsrichtung und haben zumindest einen Teilabschnitt mit einer axialen Steigungskomponente. Durch die axiale Steigung rollen die Kugeln 19 beim relativen Verdrehen des Außenrings 15 relativ zum Innenring 17 in den Kugelbahnen 20, 21, so dass der Innenring 17 relativ zum Außenring 15 axial bewegt wird.

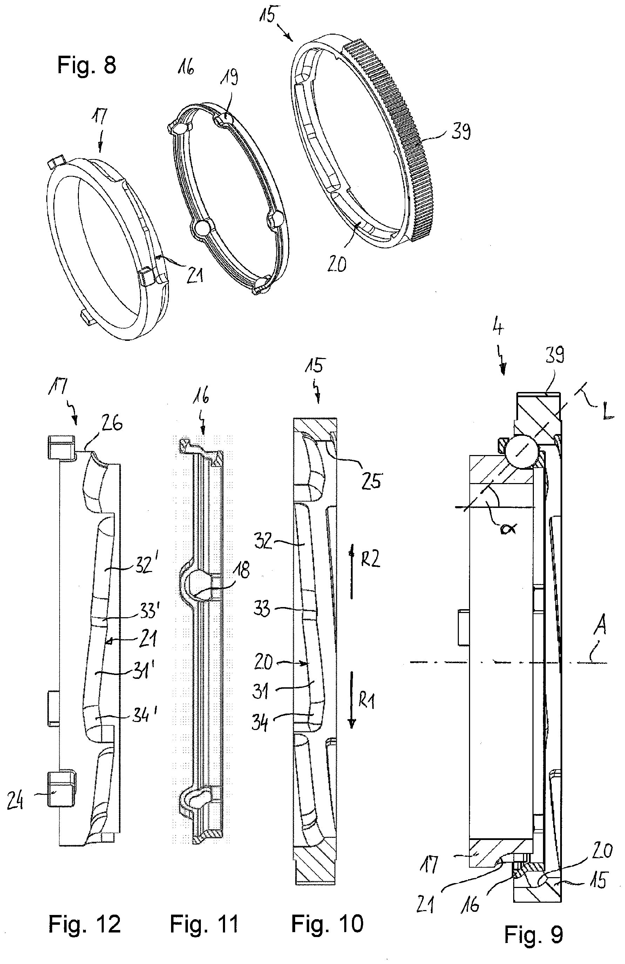

Die Kugeln 19 sind in dem Käfig 16 mit umfangsverteilten Öffnungen 18 in definierten Umfangspositionen gehalten. Wie insbesondere in Figur 11 erkennbar, sind die Öffnungen 18 umgebende Wandungsbereiche des Käfigs 16 so gestaltet, dass die Kugeln 19 gegen Herausfallen gesichert sind. Hierfür haben die einander in axialer Richtung gegenüberliegenden Wandungsbereiche der Öffnungen 18 jeweils einen der Kugelkontur angepassten Vorsprung, so dass die Kugeln zwischen den Vorsprüngen radial und axial gehalten sind. Es ist ferner vorgesehen, dass der Käfig 16 in axiale Richtung hinterschnittfrei gestaltet ist. Auf diese Weise lässt sich der Käfig in einem einzigen Pressvorgang durch eine einfache Umformoperation herstellen.

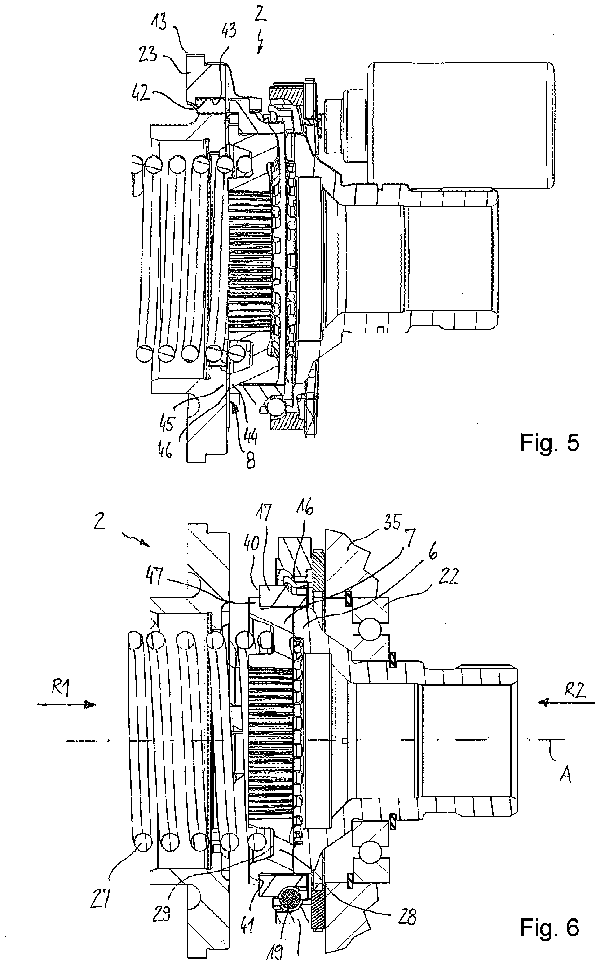

Bei der vorliegenden Ausführungsform ist der Außenring 15 mittels eines Axiallagers 22 gegenüber einem ortfesten Bauteil 35 drehbar gelagert und axial abgestützt, wie insbesondere in Figur 6 erkennbar ist. Es versteht sich jedoch, dass auch andere Ausgestaltungen hinsichtlich der Zuordnung, welcher Ring axial abgestützt und welcher Ring axial beweglich ist, denkbar sind, was ebenso für die Zuordnung gilt, welcher Ring drehend antreibbar und welcher Ring drehfest gehalten ist.

Der Innenring 17 wird von Federmitteln 27 in Richtung zum Außenring 15 beaufschlagt, welche auch als erste Richtung B1 bezeichnet wird und der Schließstellung der Kupplung 3 entspricht. Die Federmittel 27 wirken der axialen Stellkraft der Antriebseinheit 5 entgegen und können insofern auch als Rückstellfeder bezeichnet werden. Prinzipiell können die Federmittel 27 beliebig gestaltet sein, was insbesondere die Möglichkeit mit einschließt, dass ein oder mehrere Federn vorgesehen sind. Vorliegend umfassen die Federmittel eine Schraubenfeder, die koaxial zur Drehachse A angeordnet ist. Ein erstes Ende der Schraubenfeder 27 ist an der über die Innenverzahnung 14 mit dem zweiten Kupplungsteil 7 drehfest verbundenen Antriebswelle (nicht dargestellt) axial abgestützt. Ein zweites Ende der Schraubenfeder 27 ist an einem Stützabschnitt 28 des zweiten Kupplungsteils 7 axial abgestützt ist. Konkret hat das zweite Kupplungsteil 7 an einer dem ersten Kupplungsteil 6 abgewandten Seite einen Ringraum 29, in den sich das zweite Ende der Schraubenfeder 27 hineinerstreckt.

Der Außenring 15 hat eine Innenfläche 25, in der die Kugelbahnen 20 eingearbeitet sind. Der Innenring 17 hat eine Außenfläche 26, welche gegenüber der Innenfläche 25 des Außenrings 15 Radialspiel aufweist. Der Innenring 17 ist koaxial zum Außenring 15 beziehungsweise zur Drehachse A angeordnet und axial verschiebbar geführt. Die einander gegenüberliegenden Flächen 25, 26 des Außenrings 15 und Innenrings 17 überlappen sich zumindest teilweise in axiale Richtung. Das heißt, der Innenring 17 erstreckt sich in den Außenring 15 zumindest teilweise axial hinein. Die äußeren Kugelbahnen 20 haben einen größeren mittleren Durchmesser als die inneren Kugelbahnen 21. Ein kleinster Innendurchmesser der äußeren Kugelbahnen 20 größer ist als ein größter Außendurchmesser der inneren Kugelbahnen 12.

Es ist vorgesehen, dass sich die äußeren Kugelbahnen 20 und die inneren Kugelbahnen 21 in Umfangsrichtung über jeweils weniger als 120° erstrecken. Wie insbesondere aus Figur 8 hervorgeht, sind in Außenring 15 und im Innenring 17 vorliegend jeweils fünf Kugelbahnen 20, 21 vorgesehen, die sich über eine Umfangserstreckung von weniger als 90° und mehr als 60° erstrecken. Die äußeren und inneren Kugelbahnen 20, 21 sind so gestaltet, dass eine im Längsschnitt durch eine äußere und eine innere Kugelkontaktstelle verlaufende Wirkungslinie L mit der Drehachse A einen Winkel a einschließt, der größer als 0° und kleiner als 90° ist. Auf diese Weise ist die Kugelrampeneinrichtung 4 im Längsschnitt betrachtet nach Art eines Schrägkugellagers gestaltet, so dass neben der axialen Abstützung auch eine besonders gute radiale Abstützung des Außenrings gegenüber dem Innenring erreicht wird. Von der Antriebseinheit 5 in den Außenring bei der Drehmomentübertragung eingeleitete Radialkräfte können so besonders gut abgestützt werden.

Die Kugelbahnen 20, 21 haben jeweils eine variable Tiefe über den Umfang, wie insbesondere in den Figuren 8, 10 und 12 erkennbar ist. Dabei ist insbesondere vorgesehen, dass die äußeren Kugelbahnen 20 und die inneren Kugelbahnen 21 gegengleich gestaltet sind, das heißt die Konturen einer äußeren Kugelbahn 20 und einer zugehörigen inneren Kugelbahn 21, welche gemeinsam eine Kugel 19 aufnehmen, entsprechen einander zumindest im Wesentlichen. Beim Abrollen entlang der äußeren und inneren Kugelbahnen 20, 21 definieren die Kugeln 19 jeweils eine äußere und innere Kontaktkurve. Damit die Endstellungen und Zwischenstellungen der beiden Ringe 15, 17 synchron erreicht werden, sind die äußeren und inneren Kugelbahnen 20, 21 so gestaltet, dass die äußeren und inneren Kontaktkurven jeweils gleich lang sind. Die äußeren beziehungsweise inneren Kugelbahnen 20, 21 sind so gestaltet, dass eine erste Endstellung definiert ist, in der der Außenring 15 und der Innenring 17 vollständig ineinander gefahren sind und einen geringsten axialen Abstand zueinander aufweisen, sowie eine zweite Endstellung, in der der Außenring 15 und der Innenring 17 voll auseinander auseinandergefahren sind und einen größten axialen Abstand zueinander aufweisen.

Die äußeren und inneren Kugelbahnen 20, 21 haben ausgehend von der tiefsten Stelle, welche die erste Endstellung definiert, einen ersten Abschnitt 31, 31' mit einer ersten Steigung sowie einen zweiten Abschnitt 32, 32' mit einer zweiten Steigung. Die Steigung des zweiten Abschnitts 31 ist geringfügig kleiner als die Steigung des ersten Abschnitts 31, wobei es sich versteht, dass sich die Steigungen nach dem technischen Bedarf richten und auch beliebig anders gestaltet sein können. Zwischen dem ersten Abschnitt 31, 31' und dem zweiten Abschnitt 32, 32' ist ein Zwischenabschnitt 33, 33' vorgesehen, welcher eine Rastposition definiert. In der Rastposition, das heißt wenn die Kugeln 19 sich in den einander gegenüberliegenden Zwischenabschnitten 33, 33' befinden, werden die beiden Ringe 15, 17 in einem definierten axialen Abstand relativ zueinander gehalten. Diese Ausgestaltung mit rastenden Zwischenabschnitten 33, 33' ermöglicht, dass die Kupplung 3 zwischen der voll geschlossenen Schließstellung und der voll geöffnete Offenstellung eine Zwischenstellung mit definiertem axialen Abstand einnehmen kann. Die Kontur der Zwischenabschnitte 33, 33' ist so gestaltet, dass die beiden Ringe 15, 17 in der Zwischenstellung selbstständig gehalten werden, auch wenn die Antriebseinheit 5 deaktiviert ist und trotz Kraftbeaufschlagung des Innenrings 17 durch der Feder 27.

Es ist ferner erkennbar, dass die äußeren und inneren Kugelbahnen 20, 21 im Bereich der ersten Endstellung, das heißt der angenäherten Stellung, einen steigenden Auslauf 34, 34' aufweisen. Durch den steigenden Auslauf 34, 34' wird ein weiteres Verdrehen der Ringe 15, 17 relativ zueinander über die Endstellung hinaus in einem begrenzten Maße ermöglicht, so dass die gesamte drehende Masse der Antriebseinheit 5 beim Überschwingen über die Endlage abgefedert wird. Die Steigung und Umfangslänge des Auslaufs 34, 34' ist so gestaltet, dass die Kupplung 3 in der Schließstellung bleibt, auch wenn die Kugeln in diesen Bereich hineinlaufen und sich die beiden Ringe 15, 17 wieder geringfügig voneinander axial entfernen.

Die zum Betätigen der Kugelrampeneinheit 4 vorgesehene Antriebseinheit 5 ist ausgestaltet, um einen der beiden Ringe 15, 17 drehend anzutreiben, so dass dieser gegenüber dem anderen der beiden Ringe 17, 15 verdreht wird. Konkret ist bei der vorliegenden Ausführungsform vorgesehen, dass der Außenring 15 von der Antriebseinheit 5 drehend angetrieben wird, während der Innenring 17 gegenüber einem ortsfesten Gehäuseteil 23 drehfest und axial verschiebbar gehalten ist. Hierfür hat der Innenring 17 mehrere über den Umfang verteilte radiale Vorsprünge 24 die in entsprechende längliche Nuten 30 des Gehäuseteils 23 eingreifen, so dass der Innenring 17 gegenüber dem Gehäuseteil 23 verdrehgesichert, aber axial beweglich ist.

Es ist vorgesehen, dass die Antriebseinheit 5 eine steuerbare Antriebsquelle 36 und eine Kraftübertragungsvorrichtung 37 zur Übertragung einer von der Antriebsquelle 36 erzeugten Kraft auf die Kugelrampeneinheit 4 aufweist. Die Antriebsquelle 36 ist in Form eines Elektromotors gestaltet, insbesondere in Form eines Gleichstrommotors. Der Elektromotor ist mittels einer elektronischen Regeleinheit (ECU) ansteuerbar (nicht dargestellt).

Die Kraftübertragungsvorrichtung 37 weist ein Antriebsteil 38 auf, das bei der vorliegenden Ausführungsform als Antriebsritzel gestaltet ist und mit einer Außenverzahnung 39 am Außenring 15 zur Drehmomentübertragung in Verzahnungseingriff ist. Ein Antreiben des Außenrings 15 bewirkt eine Relativverdrehung gegenüber dem drehfest gehaltenen Innenring 17, so dass die Kugeln 19 entlang der Kugelbahnen 20, 21 in tiefere Bereiche laufen und der Innenring 17 in Richtung (B2) zum zweiten Kupplungsteil 7 axial verschoben wird. Durch die Kraftübertragung vom Antriebsteil 38 auf den Außenring 15 wirken entsprechende Radialkräfte auf letzteren. Die Radialkräfte können durch die ineinander liegende Anordnung der Kugelrampeneinheit 4 besonders gut radial abgestützt werden.

Wie oben bereits gesagt, wirkt die Antriebseinheit 5 zum Öffnen der Kupplung 3 in entgegengesetzter Richtung der Feder 27, welche die beiden Kupplungsteile 6, 7 in Eingriffsstellung axial beaufschlagt. Der Innenring 17 hat eine Stützfläche 40, gegen die das zweite Kupplungsteil 7 mit einer Anlagefläche 41 axial abgestützt ist. Hierfür hat das zweite Kupplungsteil 7 eine Kragen oder radialen Vorsprung 47, gegen die der Innenring 17 axial abgestützt ist. Ausgehend von der Schließstellung der Kupplung 3 bewirkt ein Betätigen der Antriebseinheit 5, dass der Innenring 17 axial vom Außenring 15 weg bewegt wird. Entsprechend beaufschlagt der Innenring 17 das zweite Kupplungsteil gegen die Vorspannkraft der Kupplungsfeder 27 vom ersten Kupplungsteil 6 weg, so dass die Kupplung 3 geöffnet wird. Ein erneutes Schließen der Kupplung 3 erfolgt durch Deaktivieren der Antriebseinheit 5 beziehungsweise zumindest kurzzeitiges Betätigung der Antriebseinheit 5 in entgegengesetzter Richtung aus der Zwischenstellung heraus. Dabei wird die Kupplung 3 mittels der Kupplungsfeder 27 geschlossen, die das zweite Kupplungsteil 7 wieder in Richtung zum ersten Kupplungsteil 6 beaufschlagt.

Es sind mehrere Vorspannfedern 42 vorgesehen, welche den Innenring 17 in Richtung zum Außenring 15 axial beaufschlagen. Die Vorspannfedern 42 bewirken, dass die beiden Ringe 15, 17 immer leicht vorgespannt relativ zueinander sind, so dass die Kugeln 19 zur abrollenden Bewegung stets in Anlagekontakt mit den äußeren und inneren Kugelbahnen 20, 21 gehalten sind. Dies gilt insbesondere für den Fall, dass die beiden Kupplungsteile 6, 7 beim Schließen der Kupplung 3 in einer Drehposition sind, in der zwei Zähne einander gegenüberliegen, das heißt eine Zahn-Zahn-Stellung statt einer Zahn-Lücke-Stellung vorliegt. In dieser Zahn-auf-Zahn-Stellung ist die Kupplung 3 noch teilweise geöffnet. Damit die Kugelrampeneinheit 4 auch in dieser Kupplungsstellung durch Rollkontakt der Kugeln 19 funktionsgemäß arbeiten kann, beaufschlagen die Vorspannfedern 42 die Kugelrampeneinheit im Schließsinn. Die Vorspannfedern 42 sind vorliegend in Form von Schraubenfedern gestaltet, welche in umfangsverteilten Bohrungen 43 des Gehäuseteils 23 einsitzen. Es sind konkret drei Bohrungen 43 und entsprechend drei Vorspannfedern 42 vorgesehen, welche im Bereich der umfangsverteilten Nuten 30 des Gehäuseteils 23 angeordnet sind. Ebenso kann diese Funktion auch von anderen Federarten erfüllt werden, wie beispielsweise einer Drahtfeder, Blechfeder, Tellerfeder, Wellfeder und/oder Federscheibe mit federnden Laschen.

Neben der Funktion Koppeln und Entkoppeln eines Antriebsstrangs mittels der Kupplung 3 hat die vorliegende Kupplungsanordnung 2 eine weitere Funktion, nämlich das Abbremsen eines mit dem zweiten Kupplungsteil 7 verbundenen Antriebsstrangabschnitts. Hierfür ist eine Bremseinheit 8 vorgesehen mit einem ersten Bremsenteil 44, das mit dem zweiten Kupplungsteil 8 fest verbunden ist, sowie einem zweiten Bremsenteil 45, das mit dem ortsfesten Gehäuse 13 fest verbunden ist. Durch axiales Beaufschlagen des zweiten Kupplungsteils 7 vom ersten Kupplungsteil 6 weg, wird das mit dem zweiten Kupplungsteil 7 verbundene und gemeinsam mit diesem rotierende Bremsenteil 44 gegen das ortsfeste Bremsenteil 45 beaufschlagt. Durch Reibschluss zwischen den Bremsenteilen 44, 45 wird das erste Bremsenteil 44 bis zum Stillstand verzögert. Somit stehen alle mit dem Bremsenbauteil 44 antriebsverbundenen Teile des Antriebsstranges still. Der Reibschluss zwischen den beiden Bremsenteilen 44, 45 erfolgt vorliegend mittelbar über eine zwischengeschaltete Reibscheibe 46. Die Reibscheibe 46 hat mehrere umfangsverteilte Vorsprünge 48, welche in die Nuten 30 des ortsfesten Gehäuseteils 23 eingreifen, so dass die Reibscheibe 46 drehfest und axial beweglich gehalten ist.

Das erste Bremsenteil 44 ist einteilig mit dem zweiten Kupplungsteil 8 gestaltet und ist insbesondere Teil des Ringabschnitts des Kupplungsteils 8. Das zweite Bremsenteil 45 ist insbesondere einteilig mit dem Gehäuse 23 gestaltet. Bei geschlossener Bremse 8 ist die Kupplung 3 geöffnet, so dass der mit dem zweiten Kupplungsteil 7 antriebsverbundene Teil des Antriebsstrangs vom ersten Kupplungsteil 6 abgekoppelt ist. In geschlossenem Zustand der Kupplung 3 ist die Bremse 8 gelöst, so dass das zweite Kupplungsteil 7 und alle hiermit antriebsverbundenen Bauteile frei drehen können. Die Bremse 8 wird mittels der Antriebseinheit 5 betätigt. Nachstehend werden die verschiedenen Betriebsmodi beschrieben.

Jeder Stellkontur des Außenrings 15 ist eine Stellkontur des Innenrings 17 zugeordnet. In der ersten Endposition der Antriebseinheit 5 befinden sich die Kugeln 19 in der tiefsten Stelle des ersten Abschnitts 31, 31' der Stellkontur beziehungsweise Kugelbahn 20, so dass die beiden Ringe 15, 17 axial aneinander angenähert sind. In diesem Schaltzustand, welcher in den Figuren 2, 3 und 6 dargestellt ist, ist die Kupplung 3 geschlossen (connect mode). Durch relatives Verdrehen des Außenrings 17 in der ersten Drehrichtung R1 wandern die Kugeln 19 am ersten Steigungsabschnitt 31 entlang, so dass der Innenring 17 axial vom Außenring 15 weg beaufschlagt wird. Dabei wird das zweite Kupplungsteil 7, an dem der Innenring 17 axial abgestützt ist, vom ersten Kupplungsteil 6 weg beaufschlagt, so dass die Kupplung 3 geöffnet wird. Ein vollständig geöffneter Zustand ist erreicht, wenn die Kugeln 19 jeweils die Zwischenabschnitte 33, 33' erreicht haben. Dieser Zustand ist in Figur 4 gezeigt. Es ist erkennbar, dass die Kupplung 3 sowie die Bremse 8 geöffnet sind. Dieser Zustand kann auch als Freilauf (disconnect mode) bezeichnet werden. Durch weiteres Drehen des Außenrings 15 in der ersten Drehrichtung R1 über den Freilaufzustand hinaus wird der Innenring 17 zusammen mit dem zweiten Kupplungsteil 7 und dem damit verbundenen ersten Bremsteil 44 in Richtung zum zweiten Bremsteil 45 beaufschlagt (B2). Dies geschieht dadurch, dass die Kugeln 19 in den zweiten Steigungsabschnitten 32, 32' entlang rollen. Dabei kommen die beiden Bremsenteile 44, 45 in Reibkontakt miteinander, so dass das drehende Bremsenteil 44 zusammen mit den hier antriebsverbundenen Bauteilen gegenüber dem stehenden Gehäuse 23 abgebremst wird. Dieser Bremszustand (brake mode) ist in Figur 5 gezeigt. In diesem Zustand steht die mit dem zweiten Kupplungsteil 7 verbundene Antriebswelle (nicht dargestellt) still und überträgt kein Drehmoment. Durch die Ausgestaltung der Rampenanordnung in der genannten Form ist gewährleistet, dass die Bremse 8 erst geschlossen wird, wenn die Kupplung 3 vollständig geöffnet ist.

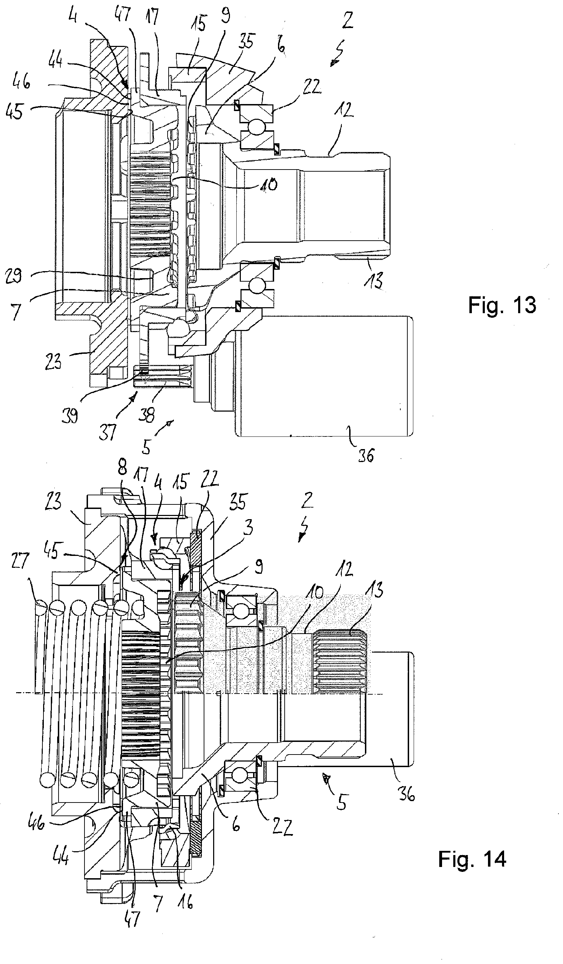

Die Figur 13 zeigt eine erfindungsgemäße Kupplungsanordnung 2 in einer zweiten Ausführungsform. Diese entspricht weitestgehend der Ausführungsform gemäß den Figuren 1 bis 12, auf deren Beschreibung insofern Bezug genommen wird. Dabei sind gleiche bzw. einander entsprechende Einzelheiten mit gleichen Bezugszeichen versehen wie in den Figuren 1 bis 12. Zur Vermeidung von Wiederholungen wird insbesondere auf die Unterschiede der vorliegenden Ausführungsform eingegangen.

Bei der vorliegenden Ausführungsform gemäß Figur 13 ist der Außenring 15 drehfest gehalten, während der Innenring 17 von der Antriebseinheit 5 drehend antreibbar ist. Konkret ist vorgesehen, dass der Außenring 17 in einem ortsfesten Gehäuseteil 35 befestigt ist, und zwar drehfest, axial fest und radial fest. Die Befestigung kann durch Einpressen des Außenrings 15 in eine entsprechende Ausnehmung des Gehäuseteils 35 erfolgen. Der Innenring 17 ist auf dem zweiten Kupplungsteil 7 mittels eines Gleitlagers drehbar gelagert. An seiner Außenumfangsfläche hat der Innenring 17 ein Zahnsegment 39, das mit dem Antriebsritzel 38 in Verzahnungseingriff ist. Durch Betätigen der Antriebsquelle 36 wird der Innenring 17 gegenüber dem Außenring 15 verdreht, so dass die Kupplung 3 geöffnet wird. Die vorliegende Ausführungsform der Kupplungsanordnung 2 ist im Bremszustand, das heißt bei vollständig geöffneter Kupplung 3 und abgebremstem zweiten Kupplungsteil 7 gezeigt. Im Übrigen entspricht die vorliegende Ausführungsform hinsichtlich Aufbau und Funktionsweise derjenigen gemäß den Figuren 1 bis 12, so dass zur Vermeidung von Wiederholungen auf die obige Beschreibung Bezug genommen wird.

Die Figur 14 zeigt eine erfindungsgemäße Kupplungsanordnung 2 in einer dritten Ausführungsform. Diese entspricht weitestgehend der Ausführungsform gemäß den Figuren 1 bis 12, auf deren Beschreibung insofern Bezug genommen wird. Dabei sind gleiche bzw. einander entsprechende Einzelheiten mit gleichen Bezugszeichen versehen wie in den Figuren 1 bis 12. Zur Vermeidung von Wiederholungen wird insbesondere auf die Unterschiede der vorliegenden Ausführungsform eingegangen.

Ein Unterschied der vorliegenden Ausführungsform gemäß Figur 14 besteht insbesondere in der Ausgestaltung der Kupplung 3, die vorliegend in Form einer Zahnkupplung gestaltet ist. Hierfür hat das erste Kupplungsteil 6 eine Außenverzahnung 9, die in eine gegengleiche Innenverzahnung 10 des zweiten Kupplungsteils 7 eingreifen kann. Im Übrigen entspricht die vorliegende Ausführungsform hinsichtlich Aufbau und Funktionsweise derjenigen gemäß den Figuren 1 bis 12, so dass zur Vermeidung von Wiederholungen auf die obige Beschreibung Bezug genommen wird.

### Bezugszeichenliste

- 2: Kupplungsanordnung
- 3: Kupplung
- 4: Kugelrampeneinheit
- 5: Antriebseinheit
- 6: erstes Kupplungsteil
- 7: zweites Kupplungsteil
- 8: Bremseinheit
- 9: Eingriffsprofil
- 10: Eingriffsprofil
- 11:
- 12: Antriebswelle
- 13: Wellenverzahnung
- 14: Wellenverzahnung
- 15: Außenring
- 16: Käfig
- 17: Innenring
- 18: Öffnung
- 19: Kugel
- 20: Kugelbahn
- 21: Kugelbahn
- 22: Axiallager
- 23: ortsfestes Gehäuseteil
- 24: Vorsprung
- 25: Innenfläche
- 26: Außenfläche
- 27: Federmittel
- 28: Stützabschnitt
- 29: Ringraum
- 30: Nut
- 31: erster Abschnitt
- 32: zweiter Abschnitt
- 33: Zwischenabschnitt
- 34: Auslauf
- 35: ortsfestes Bauteil
- 36: Antriebsquelle
- 37: Kraftübertragungsvorrichtung
- 38: Abtriebsteil
- 39: Außenverzahnung
- 40: Stützfläche
- 41: Anlagefläche
- 42: Vorspannfeder
- 43: Bohrung
- 44: erstes Bremsenteil
- 45: zweites Bremsenteil
- 46: Reibscheibe
- 47: Kragen
- 48: Vorsprung

- A: Drehachse
- B: Achsrichtung
- L: Wirkungslinie
- R: Drehrichtung

- α: Winkel

## Patentansprüche

1. Kupplungsanordnung für einen Antriebsstrang eines Fahrzeugs, umfassend:
eine Trennkupplung (3) zum Abschalten eines Antriebsstrangs, wobei die Trennkupplung (3) zumindest ein erstes Kupplungsteil (6) und ein zweites Kupplungsteil (7) aufweist;
ein Federelement (27), das die Trennkupplung (3) in eine Schließstellung beaufschlagt, in der Drehmoment zwischen dem ersten Kupplungsteil (6) und dem zweiten Kupplungsteil (7) übertragbar ist;
eine Kugelrampeneinheit (4) zum Beaufschlagen der Trennkupplung (3) in eine Offenstellung, wobei die Kugelrampeneinheit (4) einen Außenring (15) mit mehreren umfangsverteilten äußeren Kugelbahnen (20), einen Innenring (17) mit mehreren umfangsverteilten inneren Kugelbahnen (21) und mehrere Kugeln (19) aufweist, die jeweils zwischen einer äußeren Kugelbahn (20) und einer inneren Kugelbahn (21) angeordnet sind;
eine Antriebseinheit (5) zum Betätigen der Kugelrampeneinheit (4), wobei die Antriebseinheit (5) ausgestaltet ist, um einen von dem Außenring (15) und dem Innenring (17) um eine Drehachse (A) drehend anzutreiben;
wobei die äußeren Kugelbahnen (20) und die inneren Kugelbahnen (21) derart rampenartig gestaltet sind, dass ein drehendes Antreiben des drehend antreibbaren Rings mittels der Antriebseinheit (5) eine relative axiale Bewegung zwischen dem Außenring (15) und dem Innenring (17) bewirkt, so dass die Trennkupplung (3) geöffnet wird;
wobei sich die äußeren Kugelbahnen (20) und die inneren Kugelbahnen (21) in Umfangsrichtung über jeweils weniger als 120° erstrecken, und wobei die äußeren Kugelbahnen (20) und die inneren Kugelbahnen (21) so gestaltet sind, dass eine im Längsschnitt durch eine äußere und eine innere Kugelkontaktstelle verlaufende Wirkungslinie (L) mit der Drehachse (A) einen Winkel (a) einschließt, der größer als 0° und kleiner als 90° ist.

2. Kupplungsanordnung nach Anspruch 1,
**dadurch gekennzeichnet,**
**dass** die äußeren Kugelbahnen (20) und die inneren Kugelbahnen (21) so gestaltet sind, dass der Winkel (a), den die Wirkungslinie (L) mit der Drehachse (A) einschließt, größer als 20° und kleiner als 70° ist.

3. Kupplungsanordnung nach einem der Ansprüche 1 oder 2,
**dadurch gekennzeichnet,**
**dass** der Innenring (17) hülsenartig gestaltet ist und sich in den Außenring (15) hineinerstreckt, so dass sich der Innenring (17) und der Außenring (15) zumindest teilweise axial überdecken.

4. Kupplungsanordnung nach einem der Ansprüche 1 bis 3,
**dadurch gekennzeichnet,**
**dass** die äußeren Kugelbahnen (20) und/oder die inneren Kugelbahnen (21) so gestaltet sind, dass eine erste Endstellung definiert ist, in der der Außenring (15) und der Innenring (17) axial aneinander angenähert sind, wobei die Trennkupplung (3) in Schließstellung ist,
und in eine zweite Endstellung, in der der Außenring (15) und der Innenring (17) axial weiter entfernt voneinander angeordnet sind, wobei die Trennkupplung (3) in Offenstellung ist.

5. Kupplungsanordnung nach einem der Ansprüche 1 bis 4,
**dadurch gekennzeichnet,**
**dass** die äußeren Kugelbahnen (20) und/oder die inneren Kugelbahnen (21) so gestaltet sind, dass entlang des relativen Verdrehweges zwischen der ersten Endstellung und der zweiten Endstellung eine dazwischen liegende Rastposition vorgesehen ist, derart, dass der Außenring (15) und der Innenring (17) in der Rastposition in einem definierten axialen Abstand relativ zueinander gehalten werden, wenn die Antriebseinheit (5) deaktiviert ist.

6. Kupplungsanordnung nach einem der Ansprüche 1 bis 5,
**dadurch gekennzeichnet,**
**dass** die äußeren Kugelbahnen (20) und/oder die inneren Kugelbahnen (21) einen ersten Abschnitt (31, 31') mit einer ersten Steigung und einen zweiten Abschnitt (32, 32') mit einer zweiten Steigung aufweisen, wobei insbesondere vorgesehen ist, dass zwischen dem ersten Abschnitt (31, 31') und dem zweiten Abschnitt (32, 32') ein vertiefter Zwischenabschnitt (33, 33') gebildet ist, der die Rastposition definiert.

7. Kupplungsanordnung nach einem der Ansprüche 1 bis 6,
**dadurch gekennzeichnet,**
**dass** zumindest einer von dem Außenring (15) und dem Innenring (17) in axiale Richtung hinterschnittfrei gestaltet ist.

8. Kupplungsanordnung nach einem der Ansprüche 1 bis 7,
**dadurch gekennzeichnet,**
**dass** ein Käfig (16) mit umfangsverteilten Öffnungen (18) vorgesehen ist, in denen die Kugeln (19) gehalten sind, wobei die Öffnungen (18) umgebende Wandungsbereiche des Käfigs (16) so gestaltet sind, dass die Kugeln (19) gegen Herausfallen gesichert sind.

9. Kupplungsanordnung nach einem der Ansprüche 1 bis 8,
**dadurch gekennzeichnet,**
**dass** die Kugeln (19) beim Abrollen entlang der äußeren und inneren Kugelbahnen (20, 21) jeweils eine äußere und innere Kontaktlinie definieren, wobei die äußeren und inneren Kugelbahnen (20, 21) so gestaltet sind, dass die äußeren und inneren Kontaktlinien jeweils gleich lang sind.

10. Kupplungsanordnung nach einem der Ansprüche 1 bis 9,
**dadurch gekennzeichnet,**
**dass** der Außenring (15) gegenüber einem ortsfesten Bauteil (35) axial abgestützt und mittels der Antriebseinheit (5) drehend antreibbar ist, und dass der Innenring (17) gegenüber dem Außenring (15) axial bewegbar und gegenüber einem Gehäuse (23) drehfest gehalten ist.

11. Kupplungsanordnung nach einem der Ansprüche 1 bis 10,
**dadurch gekennzeichnet,**
**dass** die Antriebseinheit (5) eine steuerbare Antriebsquelle (36) und eine Kraftübertragungsvorrichtung (37) zur Übertragung einer von der Antriebsquelle (36) erzeugten Kraft auf die Kugelrampeneinheit (4) aufweist,
wobei die Kraftübertragungsvorrichtung (37) ein Antriebsteil (38) aufweist, das mit einer Außenverzahnung (39) am Außenring (15) zur Drehmomentübertragung in Verzahnungseingriff ist.

12. Kupplungsanordnung nach einem der Ansprüche 1 bis 11,
**dadurch gekennzeichnet,**
**dass** die Feder (27) derart eingebaut und gestaltet ist, dass sie einer durch die Antriebseinheit (5) erzeugten axialen Bewegungsrichtung (B2) entgegenwirkt (B1) und die Trennkupplung (3) in eine Schließstellung beaufschlagt.

13. Kupplungsanordnung nach einem der Ansprüche 1 bis 12,
**dadurch gekennzeichnet,**
**dass** zumindest eine Vorspannfeder (42) vorgesehen ist, die in derselben Richtung (B1) wirkt wie die Feder (27) und die den Außenring (15) und den Innenring (17) gegeneinander vorspannt, so dass die Kugeln (19) zur abrollenden Bewegung stets in Anlagekontakt mit den äußeren und inneren Kugelbahnen (20, 21) gehalten sind.

14. Kupplungsanordnung nach einem der Ansprüche 1 bis 13,
**dadurch gekennzeichnet,**
**dass** eine Bremseinrichtung (8) zum Abbremsen eines von dem ersten und dem zweiten Kupplungsteil (6, 7) vorgesehen ist, wobei die Bremseinrichtung (8) von der Antriebseinheit (5) über die Kugelrampenanordnung (4) betätigbar ist.

15. Kupplungsanordnung nach einem der Ansprüche 1 bis 14,
**dadurch gekennzeichnet,**
**dass** die Trennkupplung (3) in Form einer Formschlusskupplung gestaltet ist, wobei das erste Kupplungsteil (6) und das zweite Kupplungsteil (7) in Schließstellung formschlüssig ineinander greifen und in Offenstellung voneinander entkoppelt sind, so dass das erste Kupplungsteil (6) und das zweite Kupplungsteil (7) relativ zueinander frei drehbar sind;
wobei die Kugelrampeneinheit (4) mit einem von dem ersten und dem zweiten Kupplungsteil (6, 7) derart wirkverbunden ist, dass das erste und das zweite Kupplungsteil (6, 7) bei Betätigung der Kugelrampeneinheit (4) durch die Antriebseinheit (5) voneinander weg bewegt werden.

16. Verfahren zur Steuerung einer Kupplungsanordnung (2) nach einem der Ansprüche 1 bis 15, wobei einer von dem Außenring und dem Innenring (15, 17) an einem ortsfesten Bauteil (23, 35) axial abgestützt ist und der andere von dem Außenring und dem Innenring (17, 15) durch Betätigen der Antriebseinheit (5) axial bewegbar ist, mit den Schritten:
Öffnen der Trennkupplung (3) durch Betätigung der Antriebseinheit (5) in eine erste Betätigungsrichtung (R1), wobei der axial bewegliche Ring (15, 17) mindestens in eine Rastposition bewegt wird;
Bremsen einer mit dem zweiten Kupplungsteil (7) verbundenen Antriebswelle, wenn das erste Kupplungsteil (6) und das zweite Kupplungsteil (7) voneinander entkoppelt sind, dadurch, dass der axial bewegliche Ring (15, 17) über eine Rastposition hinaus vom axial abgestützten Ring (17, 15) wegbewegt wird, so dass das zweite Kupplungsteil (7) zumindest mittelbar mit einem ortsfesten Bauteil in Anlage gebracht wird;
Deaktivieren der Antriebseinheit (5), wobei der axial bewegliche Ring (15, 17) in der Rastposition mit Abstand relativ zum axial abgestützten Ring (17, 15) gehalten wird, so dass die Trennkupplung (3) geöffnet bleibt;
Schließen der Trennkupplung (3) durch Betätigung der Antriebseinheit (5) in eine entgegengesetzte zweite Betätigungsrichtung (R2), wobei der axial bewegliche Ring (15, 17) aus der Zwischenrastposition herausbewegt wird und mittels der Feder (27) in Richtung zum axial abgestützten Ring (17, 15) beaufschlagt wird.

## Claims

1. A clutch assembly for a driveline of a motor vehicle, comprising:
a disconnect clutch (3) for disconnecting a driveline, wherein the disconnect clutch (3) comprises at least a first clutch part (6) and a second clutch part (7);
a spring element (27) that loads the disconnect clutch (3) into a closed position in which torque is transmittable between the first clutch part (6) and the second clutch part (7);
a ball ramp unit (4) for loading the disconnect clutch (3) into an open position, wherein the ball ramp unit (4) comprises an outer ring (15) with a plurality of circumferentially distributed outer ball tracks (20), an inner ring (17) with a plurality of circumferentially distributed inner ball tracks (21) and a plurality of balls (19) which are each arranged between an outer ball track (20) and an inner ball track (21);
a drive unit (5) for operating the ball ramp unit (4), wherein the drive unit (5) is configured to rotatingly drive one of the outer ring (15) and the inner ring (17) around a rotational axis (A);
wherein the outer ball tracks (20) and the inner ball tracks are configured to be ramp-like such that rotatingly driving the rotatingly drivable ring by the drive unit (5) effects a relative axial movement between the outer ring (15) and the inner ring (17), so that the disconnect clutch (3) is opened;
wherein the outer ball tracks (20) and the inner ball tracks (21) each extend in the circumferential direction across less than 120°, and wherein the outer ball tracks (20) and the inner ball tracks (21) are configured such that a force line (L), that in a longitudinal section extends through an outer and an inner ball contact area, encloses an angle (a) with the rotational axis (A) that is greater than 0° and smaller than 90°.

2. Clutch assembly according to claim 1,
**characterised in**
**that** the outer ball tracks (20) and the inner ball tracks (21) are configured such that the angle (a) which is enclosed by the force line (L) and the rotational axis (A) is greater than 20° and smaller than 70°.

3. Clutch assembly according to claim 1 or 2,
**characterised in**
**that** the inner ring (17) is configured sleeve-like and extends into the outer ring (15), so that the inner ring (17) and the outer ring (15) at least partially axially overlap.

4. Clutch assembly according to any one of claims 1 to 3,
**characterised in**
**that** the outer ball tracks (20) and/or the inner ball tracks (21) are configured such that a first end position is defined in which the outer ring (15) and the inner ring (17) are axially approximated to one another, wherein the disconnect clutch (3) is in the closed position,
and **that** in a second end position in which the outer ring (15) and the inner ring (17) are arranged so as to be further away from one other, wherein the disconnect clutch (3) is in the open position.

5. Clutch assembly according to any one of claims 1 to 4,
**characterised in**
**that** the outer ball tracks (20) and/or the inner ball tracks (21) are configured such that along the relative rotational path an engagement position is provided between the first end position and the second end position such that, in the engagement position, the outer ring (15) and the inner ring (17) are held at a defined axial distance from one another when the drive unit (5) is deactivated.

6. Clutch assembly according to any one of claims 1 to 5,
**characterised in**
**that** the outer ball tracks (20) and/or the inner ball tracks (21) comprise a first portion (31, 31') with a first gradient and a second portion (32, 32') with a second gradient, wherein it is proposed in particular that between the first portion (31, 31') and the second portion (32, 32') a deepened intermediate portion (33, 33') is formed which defines the engagement position.

7. Clutch assembly according to any one of claims 1 to 6,
**characterised in**
**that** at least one of the outer ring (15) and of the inner ring (17) is configured to be undercut-free in an axial direction.

8. Clutch assembly according to any one of claims 1 to 7,
**characterised in**
**that** there is provided a cage (16) with circumferential openings (18) in which the balls (19) are held, wherein wall regions of the cage (16) surrounding the openings (18) are configured such that the balls (19) are prevented from falling out.

9. Clutch assembly according to any one of claims 1 to 8,
**characterised in**
**that** the balls (19) when rolling along the outer and inner ball tracks (20, 21) each define an outer and inner contact line, wherein the outer and inner ball tracks (20, 21) are configured such that the outer and inner contact lines are of equal length.

10. Clutch assembly according to any one of claims 1 and 9,
**characterised in**
**that** the outer ring (15) is axially supported against a stationary component (25) and is rotatingly drivable by the drive unit (5), and
**that** the inner ring (17) is axially movable relative to the outer ring (15) and is held in a rotationally fixed manner relative to a housing (23).

11. Clutch assembly according to any one of claims 1 to 10,
**characterised in**
**that** the drive unit (5) comprises a controllable driving source (36) and a force transmitting device (37) for transmitting a force generated by the driving source (36) to the ball ramp unit (4),
wherein the force transmitting device (37) comprises a drive part (38) which meshingly engages an outer toothing (39) at the outer ring (15) for transmitting torque.

12. Clutch assembly according to any one of claims 1 to 11,
**characterised in**
**that** the spring (27) is installed and configured such that it acts against an axial movement direction (B2) generated by the drive unit (5) and loads the disconnect clutch (3) into a closed position.

13. Clutch assembly according to any one of claims 1 to 12,
**characterised in**
**that** at least one pretensioning spring (42) is provided which acts in the same direction (B1) as the spring (27) and pretensions the outer ring (15) and the inner ring (17) relative to one another, so that the balls (19), to achieve a rolling movement, are always held in contact with the outer and inner ball tracks (20, 21).

14. Clutch assembly according to any one of claims 1 to 13,
**characterised in**
**that** a braking device (8) is provided for braking one of the first and the second clutch part (6, 7), wherein the braking device (8) is operable by the drive unit (5) via the ball ramp assembly (4).

15. Clutch assembly according to any one of claims 1 to 14,
**characterised in**
**that** the disconnect clutch (3) is configured in the form of a form-locking clutch, wherein, in the closed position, the first clutch part (6) and the second clutch part (7) engage one another in a force-fitting way and, in the open position, are disconnected from one another so that the first clutch part (6) and the second clutch part (7) are freely rotatable relative to one another;
wherein the ball ramp unit (4) is effectively connected to one of the first and of the second clutch part (6, 7) such that, when the ball ramp unit is operated, the first and the second clutch part (6, 7) are moved away from one another by the drive unit (5).

16. A method of controlling the clutch assembly (2) according to any one of claims 1 to 15, wherein one of the outer ring and the inner ring (15, 17) is axially supported on a stationary component (23, 35) and the other one of the outer ring and the inner ring (17, 15) is axially movable by operating the drive unit (5), comprising the steps:
opening the disconnect clutch (3) by operating the drive unit (5) in a first operating direction (R1), wherein the axially movable ring (15, 17) is at least moved into an engagement position;
braking a driveshaft connected to the second clutch part (7) when the first clutch part (6) and the second clutch part (7) are disconnected from one another by moving the axially movable ring (15, 17) beyond an engagement position away from the axially supported ring (17, 15), so that the second clutch part (7) is at least indirectly brought into contact with a stationary component;
deactivating the drive unit (5), wherein the axially movable ring (15, 17) is held in the engagement position at a distance from the axially supported ring (17, 15), so that the disconnect clutch (3) remains open;
closing the disconnect clutch (3) by operating the drive unit (5) in an opposed second operating direction (R2), wherein the axially movable ring (15, 17) is moved out of the intermediate engagement position and is loaded towards the axially supported ring (17, 15) by the spring (27).

## Revendications

1. Système d'embrayage pour une chaîne cinématique de transmission d'un véhicule, comprenant :
un embrayage de coupure (3) pour débrayer une chaîne cinématique de transmission, sachant que l'embrayage de coupure (3) comporte au moins une première partie d'embrayage (6) et une deuxième partie d'embrayage (7) ;
un élément à ressort (27), qui sollicite l'embrayage de coupure (3) dans une position de fermeture dans laquelle un couple peut être transmis entre la première partie d'embrayage (6) et la deuxième parie d'embrayage (7) ;
un ensemble rampes et billes (4) pour solliciter l'embrayage de coupure (3) dans une position d'ouverture, sachant que l'ensemble rampes et billes (4) comporte une bague extérieure (15) avec plusieurs pistes de billes (20) extérieures réparties sur la périphérie, une bague intérieure (17) avec plusieurs pistes de billes (21) intérieures réparties sur la périphérie et plusieurs billes (19), qui sont disposées respectivement entre une piste de billes (20) extérieure et une piste de billes (21) intérieure ;
un ensemble de transmission (5) pour actionner l'ensemble rampes et billes (4), sachant que l'ensemble de transmission (5) est équipé pour entraîner en rotation une de la bague extérieure (15) et de la bague intérieure (17) autour d'un axe de rotation (A) ;
sachant que les pistes de billes extérieures (20) et les pistes de billes intérieures (21) sont structurées comme des rampes de telle sorte qu'un entraînement rotatif de la bague pouvant être entraînée en rotation cause au moyen de l'ensemble de transmission (5) un mouvement axial relatif entre la bague extérieure (15) et la bague intérieure (17) de sorte que l'embrayage de coupure (3) est ouvert ;
sachant que les pistes de billes extérieures (20) et les pistes de billes intérieures (21) s'étendent en direction périphérique respectivement sur moins de 120° et sachant que les pistes de billes extérieures (20) et les pistes de billes intérieures (21) sont structurées de telle manière qu'une ligne d'action (L) passant en coupe longitudinale par un point de contact de bille extérieur et un point de contact de bille intérieur forme avec l'axe de rotation (A) un angle (α) qui est supérieur à 0° et inférieur à 90°.

2. Système d'embrayage selon la revendication 1,
**caractérisé en ce que**
les pistes de billes extérieures (20) et les pistes de billes intérieures (21) sont structurées de telle manière que l'angle (a) formant la ligne d'action (L) avec l'axe de rotation (A), est supérieur à 20° et inférieur à 70°.

3. Système d'embrayage selon l'une quelconque des revendications 1 ou 2,
**caractérisé en ce que**
la bague intérieure (17) est structurée comme un manchon et s'étend dans la bague extérieure (15) de telle manière que la bague intérieure (17) et la bague extérieure (15) se chevauchent axialement au moins en partie.

4. Système d'embrayage selon l'une quelconque des revendications 1 à 3,
**caractérisé en ce que**
les pistes de billes extérieures (20) et/ou les pistes de billes intérieures (21) sont structurées de telle manière qu'une première position finale est définie dans laquelle la bague extérieure (15) et la bague intérieure (17) sont rapprochées axialement l'une contre l'autre, sachant que l'embrayage de coupure (3) est en position de fermeture,
et dans une deuxième position finale, dans laquelle la bague extérieure (15) et la bague intérieure (17) sont disposées axialement plus éloignées l'une de l'autre, sachant que l'embrayage de coupure (3) est en position d'ouverture.

5. Système d'embrayage selon l'une quelconque des revendications 1 à 4,
**caractérisé en ce que**
les pistes de billes extérieures (20) et/ou les pistes de billes intérieures (21) sont structurées de telle manière que le long de la course de rotation relative entre la première position finale et la deuxième position finale, une position d'enclenchement est prévue entre les deux de telle sorte que la bague extérieure (15) et la bague intérieure (17) sont maintenues dans la position d'enclenchement à une distance axiale définie l'une par rapport à l'autre, si l'ensemble de transmission (5) est désactivé.

6. Système d'embrayage selon l'une quelconque des revendications 1 à 5,
**caractérisé en ce que**
les pistes de billes extérieures (20) et/ou les pistes de billes intérieures (21) comportent une première section (31, 31') avec une première pente et une deuxième section (32, 32') avec une deuxième pente, sachant notamment qu'il est prévu qu'entre la première section (31, 31') et la deuxième section (32, 32'), une section intermédiaire plus profonde (33, 33') est formée, qui définit la position d'enclenchement.

7. Système d'embrayage selon l'une quelconque des revendications 1 à 6,
**caractérisé en ce qu'**
au moins une de la bague extérieure (15) et de la bague intérieure (17) est structurée sans dépouille arrière dans le sens axial.

8. Système d'embrayage selon l'une quelconque des revendications 1 à 7,
**caractérisé en ce qu'**
une cage (16) avec des ouvertures (18) réparties sur la périphérie est prévue, dans lesquelles sont maintenues les billes (19), sachant que les zones de paroi de la cage (16) entourant les ouvertures (18) sont structurées de telle manière que les billes (19) sont sécurisées contre la chute.

9. Système d'embrayage selon l'une quelconque des revendications 1 à 8,
**caractérisé en ce que**
les billes (19) définissent respectivement une ligne de contact extérieure et intérieure en roulant le long des pistes de billes extérieures et intérieures (20, 21), sachant que les pistes de billes extérieures et intérieures (20, 21) sont structurées de telle manière que les lignes de contact extérieures et intérieures sont respectivement de même longueur.

10. Système d'embrayage selon l'une quelconque des revendications 1 à 9,
**caractérisé en ce que**
la bague extérieure (15) est soutenue axialement par rapport à un composant fixe (35) et peut être entraînée en rotation au moyen de l'ensemble de transmission (5) et **en ce que** la bague intérieure (17) peut être déplacée axialement par rapport à la bague extérieure (15) et est maintenue solidaire en rotation par rapport à un boîtier (23).

11. Système d'embrayage selon l'une quelconque des revendications 1 à 10,
**caractérisé en ce que**
l'ensemble de transmission (5) comporte une source de transmission (36) pouvant être commandée et un dispositif de transmission de force (37) pour transmettre une force produite par la source de transmission (36) à l'ensemble rampes et billes (4),
sachant que le dispositif de transmission de force (37) comporte une partie de transmission (38), qui est en engrènement de denture avec une denture extérieure (39) sur la bague extérieure (15) pour la transmission du couple.

12. Système d'embrayage selon l'une quelconque des revendications 1 à 11,
**caractérisé en ce que**
le ressort (27) est monté et structuré de telle manière qu'il s'oppose (B1) à une direction de mouvement (B2) axiale produite par l'ensemble de transmission (5) et sollicite l'embrayage de coupure (3) dans une position de fermeture.

13. Système d'embrayage selon l'une quelconque des revendications 1 à 12,
**caractérisé en ce qu'**
au moins un ressort de précontrainte (42) est prévu, qui agit dans la même direction (B1) que le ressort (27) et précontraint la bague extérieure (15) et la bague intérieure (17) l'une contre l'autre de telle manière que les billes (19) pour un mouvement de roulement sont toujours maintenues en contact d'appui avec les pistes de billes extérieures et intérieures (20, 21).

14. Système d'embrayage selon l'une quelconque des revendications 1 à 13,
**caractérisé en ce qu'**
un système de freinage (8) est prévu pour freiner une de la première ou de la deuxième partie d'embrayage (6, 7), sachant que le système de freinage (8) peut être actionné par l'unité de transmission (5) par le biais de l'ensemble rampes et billes (4).

15. Système d'embrayage selon l'une quelconque des revendications 1 à 14,
**caractérisé en ce que**
l'embrayage de coupure (3) est structuré sous la forme d'un accouplement par conformité de forme, sachant que la première partie d'embrayage (6) et la deuxième partie d'embrayage (7) viennent en prise l'une dans l'autre en position de fermeture par conformité de forme et sont découplées l'une de l'autre en position d'ouverture de telle manière que la première partie d'embrayage (6) et la deuxième partie d'embrayage (7) peuvent tourner librement l'une par rapport à l'autre ;
sachant que l'ensemble rampes et billes (4) est relié de façon fonctionnelle à l'une de la première et de la deuxième partie d'embrayage (6, 7) de telle manière que la première et la deuxième partie d'embrayage (6, 7) sont déplacées éloignées l'une de l'autre par l'ensemble de transmission (5) en actionnant l'ensemble rampes et billes (4).

16. Procédé pour assurer la commande d'un système d'embrayage (2) selon l'une quelconque des revendications 1 à 15, sachant que l'une de la bague extérieure et de la bague intérieure (15, 17) est soutenue axialement sur un composant fixe (23, 35) et l'autre de la bague extérieure et de la bague intérieure (17, 15) peut être déplacée axialement en actionnant l'ensemble de transmission (5), avec les étapes de :
ouverture de l'embrayage de coupure (3) en actionnant l'ensemble de transmission (5) dans une première direction d'actionnement (R1), sachant que la bague axialement mobile (15, 17) est déplacée au moins dans une position d'enclenchement ;
freinage d'un arbre de transmission relié à la deuxième partie d'embrayage (7), si la première partie d'embrayage (6) et la deuxième partie d'embrayage (7) sont découplées l'une de l'autre par le fait que la bague axialement mobile (15, 17) est éloignée par le biais d'une position d'enclenchement de la bague axialement soutenue (17, 15) de telle manière que la deuxième partie d'embrayage (7) est mise en appui au moins indirectement avec un composant fixe ;
désactivation de l'ensemble de transmission (5), sachant que la bague axialement mobile (15, 17) est maintenue dans la position d'enclenchement à distance par rapport à la bague axialement soutenue (17, 15) de telle manière que l'embrayage de coupure (3) reste ouvert ;
fermeture de l'embrayage de coupure (3) en actionnant l'ensemble de transmission (5) dans une deuxième direction d'actionnement (R2) opposée, sachant que la bague axialement mobile (15, 17) est déplacée hors de la position d'enclenchement intermédiaire et est sollicitée au moyen du ressort (27) en direction de la bague axialement soutenue (17, 15).
